# EUROPEAN PATENT APPLICATION

(11) **EP 2 000 750 A2**
(43) Date of publication of application: **10.12.2008**
(21) Application number: 08009674.6
(22) Date of filing: 28.05.2008
(51) Int. Cl.: F24J 2/54, H01L 31/042

(54) **System comprising an array of solar collectors with solar tracking**

(30) Priority: 06.06.2007 IT TO20070394
(71) Applicant: Degiovanni, Ezio, 12011 Borgo San Dalmazzo (CN) (IT)
(72) Inventor: Degiovanni, Ezio, 12011 Borgo San Dalmazzo (CN) (IT)
(74) Representative: Aprà, Mario

(57) **Abstract**

The system of solar collectors according to the invention comprises, for each row (F) of collectors (11), a sturdy flat supporting structure (12), in which the collectors (11) are mounted rotatingly about a respective central axis (Y-Y), while said supporting structure (12) is supported in a manner oscillating about a respective axis (X-X), so that oscillation of each structure (12) about the axis (X-X) and oscillation of the collectors (11) about the respective axes (Y-Y) determine perpendicular alignment of the active surface of the collectors (11) with respect to the solar radiation.

## Description

The present invention relates to a system comprising an array of solar collectors with solar tracking.

The aforesaid system allows a plurality of solar collectors with photovoltaic modules to be maintained with the active surface thereof substantially perpendicular to the sun's rays.

A photovoltaic module is a device capable of converting solar energy directly into electrical energy by means of the photovoltaic effect and is used to generate electricity from sunlight. It can be mechanically preassembled to form, with other modules, a collector with photovoltaic modules. Several collectors with movements coordinated for solar tracking form an array.

The performance of photovoltaic modules is susceptible to variations which can be substantial, according to:
the yield of the materials;
the percentage of manufacturing tolerance with respect to the rating plate values;
the radiation to which the cells are exposed;
the angle at which this radiation reaches the surface thereof,
the operating temperature of the materials, which tend to become "fatigued" in hot environments;
the composition of the light spectrum.

The most common photovoltaic modules made of crystalline silicon have dimensions that vary from 0.5 m² to 1.5 5 m², with peaks of 2.5 m² in examples for large-scale systems. However, there is no particular interest in constructing modules of large dimensions, due to the noteworthy losses of performance to which the entire module is subject when a single cell thereof is shaded (or malfunctions).

Also for this reason, as well as for greater ease of orientation, it is advisable to produce arrays of solar collectors with photovoltaic modules, in which the dimensions of each collector are relatively small.

Currently known systems comprising arrays of solar collectors with solar tracking are structurally complex, easily subject to breakages and costly. In fact, they require, for example, optical sensors and mechanical/electrical actuators, which break easily. Their structure is often subject to damage caused by high winds. Moreover, these systems make use of sophisticated electronics to control the movement of the solar collectors. Maintenance of known systems is complex and costly.

On the basis of the notion of these drawbacks, the present invention intends to offer a solution.

An object of the present invention is to provide a system comprising an array of solar collectors with solar tracking, substantially of the two-axis type, which is devoid of complex and/or delicate components, so as to simplify the structure thereof.

Another object of the present invention is to provide a system as specified, that comprises simplified electronics to control the means to control movement of the array of solar collectors.

A further object of the invention is to provide a system as indicated, which ensures sufficient structural solidity to withstand not only the weight of its components, but also the wind load, even in stormy conditions.

Yet another object of the invention is to provide a system as indicated, which requires simplified and easy maintenance.

In view of these objects the present invention provides a system comprising an array of solar collectors with solar tracking, the essential characteristics of which form the subject-matter of claim 1.

Further advantageous characteristics are described in the dependent claims.

The aforesaid claims are intended as fully reproduced herein.

The present invention will be more apparent from the detailed description below with reference to the accompanying drawing, provided purely by way of non-limiting example, wherein:
- fig. 1 shows a partial view, in side elevation, of the system comprising an array of solar collectors with solar tracking according to an example of embodiment of the invention, applied to the roof of an industrial building;
- fig. 2 shows a partial view in the direction of the arrow II of fig. 1;
- fig. 3 shows a top plan view of a part of the system of solar collectors according to fig. 1;
- fig. 4 shows a schematic, partial perspective front view, on a different scale, of the system of solar collectors according to fig. 1;
- fig. 5 shows a detailed exploded and partly cross-sectional view, on a larger scale, of the detail V of fig. 4;
- fig. 6 shows a partial perspective rear view, on a different scale, of the system of solar collectors according to fig. 1,
- fig. 7 shows a detailed view, on a larger scale, of the detail VII of fig. 6.

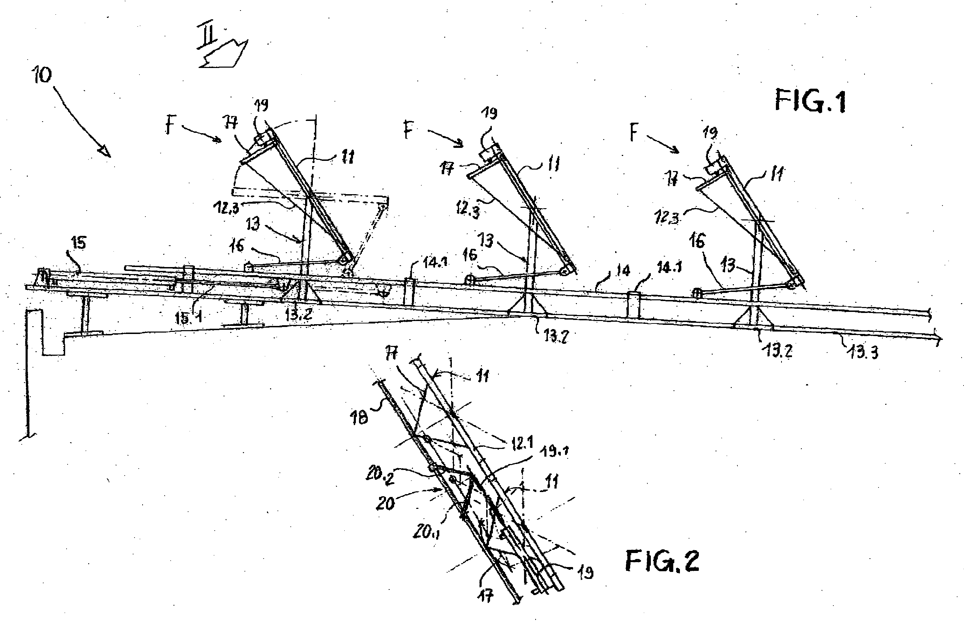

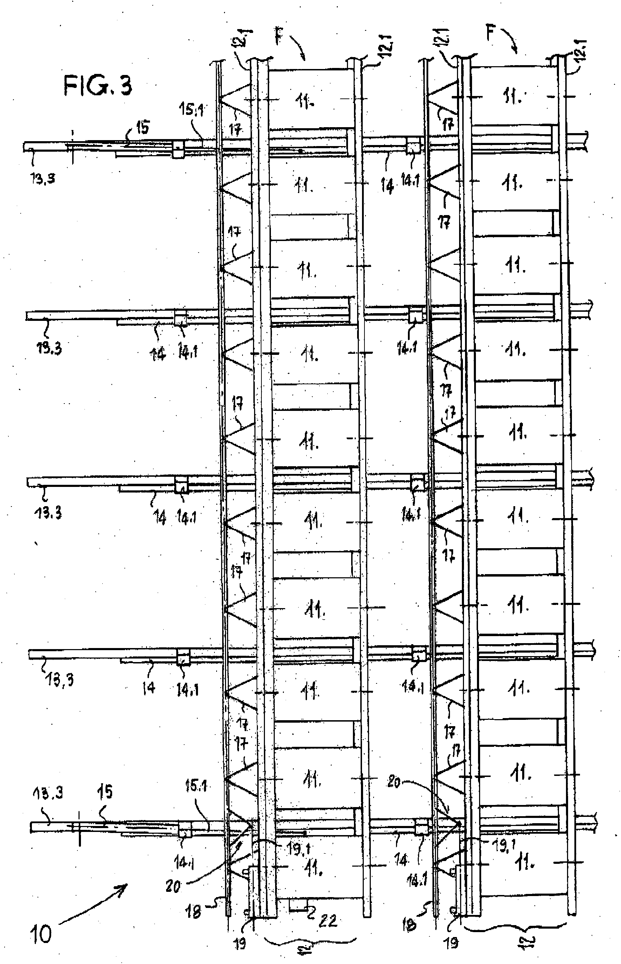

With reference to the drawings, the number 10 (figs. 1, 3) indicates as a whole the system comprising an array of solar collectors with solar tracking according to said example of embodiment of the invention.

Said system 10 comprises a plurality of solar collectors 11 with photovoltaic modules, which are arranged in at least three rows F (only two of which are shown in fig. 3). Each solar collector 11 is formed of sturdy flat rectangular panel with metal frame, supporting on one face thereof a conventional arrangement of suitably wired photovoltaic modules.

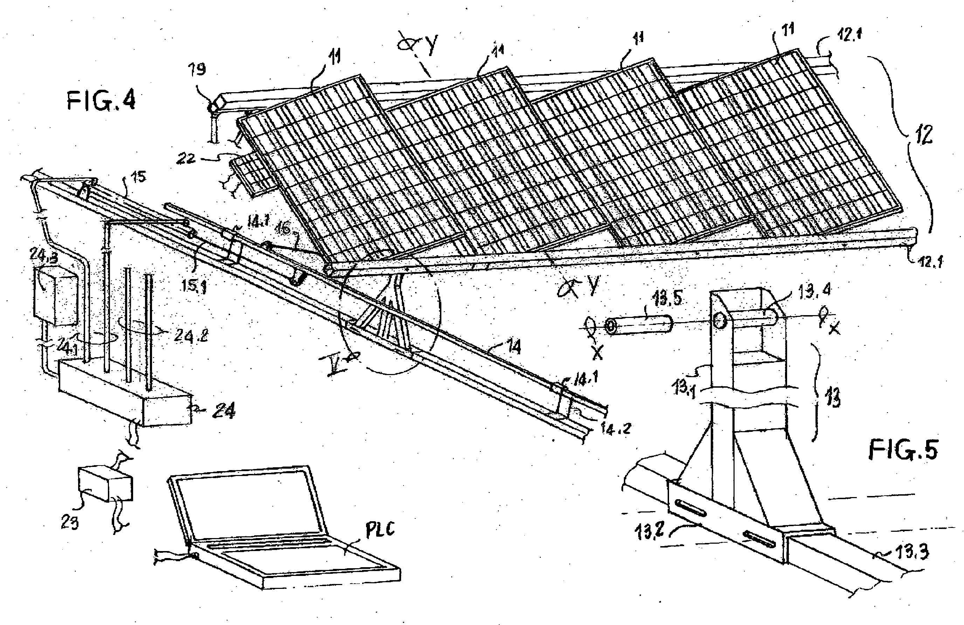

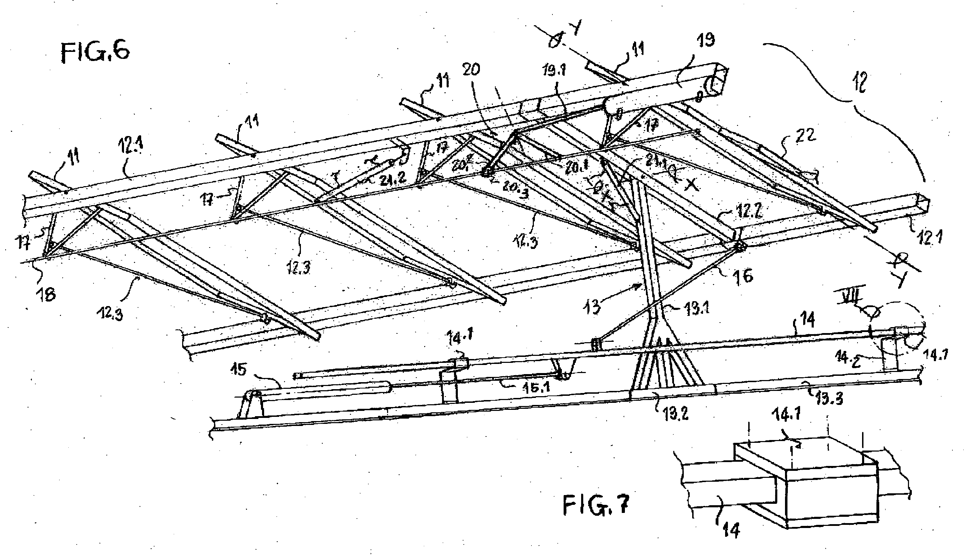

The collectors 11 of each row F are supported in a long flat supporting structure 12 (figs. 4, 6), comprising two parallel beams 12.1 made of sturdy square metal section bars and several orthogonal cross members 12.2 (only one of which is represented in fig.6) made of sturdy square metal section bars, which produce a solid join with respect to said beams. The collectors 11 are mounted in said structure 12 in a rotatable manner about a respective central axis Y-Y (figs. 4, 6) essentially orthogonal to said beams 12.1 and contained in this structure. Moreover, each supporting structure 12 is, in turn, supported in a manner oscillating about a respective axis X-X essentially horizontal and substantially parallel to the beams 12.1, by means of a plurality of sturdy pedestals 13 (only one of which is shown in figs. 6, 7) firmly anchored to the roof on which the system 10 is installed. Each pedestal 13 is formed (fig.5) of a sturdy rectangular metal section bar 13.1 welded at the base thereof to an upside down U-shaped foot 13.2, also made of metal section bar and which rests, with shape coupling, on a corresponding sturdy rectilinear U-shaped channel 13.3, also made of metal section bar, fastened to the roof of the building. As can be seen in fig. 3, said channels 13.3 extend, according to respective vertical planes essentially orthogonal to the axis X-X, beyond the rows F of collectors 11, on both sides of these rows. Slots are provided in the feet 13.2 of the pedestals 13 for the necessary adjustments in position during assembly. At the upper end, each pedestal 13 carries a fixed sleeve 13.4 lined internally with a corresponding Teflon anti-friction bushing 13.5 and oriented according to said axis X-X. Each sleeve 13.4 receives a corresponding through pin (not shown), fastened in the center line of a corresponding cross member 12.2 of the structure 12, according to a rocker arm arrangement.

It can be noted that the purpose of oscillation of each structure 12 about the axis X-X, on the one hand, and oscillation of the collectors 11 about the respective axes Y-Y, on the other hand, is to optimize perpendicular alignment of the active surface of the collectors 11 with respect to the solar radiation.

The adjacent channels 13.3 are spaced apart by a greater pitch than the width occupied in each structure 12 by two adjacent solar collectors 11.

Each channel 13.3 supports a respective overhead and parallel prismatic operating bar 14 (fig. 6), guided to slide in a vertical plane parallel to that of the channel by means of a plurality of corresponding fixed prismatic guides, for example made of Teflon, 14.1. Said guides 14.1 are supported at a distance from the respective channel by means of a plurality of rigid vertical arms 14.2, made of metal.

Moreover, one channel 13.3 in four (figs. 3, 6) carries, pivoted at one end thereof, a first double-acting hydraulic operator cylinder 15, the rod 15.1 of which, at the free end, is in turn pivoted to the respective prismatic operating bar 14. The axes of the pivot pins of said parts are substantially orthogonal to the vertical planes on which the channels 13.3 and relative operating bars 14 lie.

Moreover, an articulated connecting rod 16 is connected, at one end thereof, with respect to a respective operating bar 14 and, at the other end thereof, with respect to one of the two beams 12.1 of the structure 12, by means of respective pins with axes substantially orthogonal to said vertical planes. By means of this arrangement, when the rod 15.1 of the cylinders 15 is extended to the end of stroke thereof, the structure 12 is oscillated about the axis X-X to a position in proximity of the horizontal, while when the rods 15.1 are fully retracted, the structure 12 takes a position substantially inclined by 45° with respect to the horizontal (fig.1), in which the beam 12.1 connected to said connecting rods 16, called herein "lower beam", is positioned in proximity of the operating bars 14.

The side of the metal frame of each collector 11 parallel and in proximity to the other beam 12.1, called herein "upper beam", carries fastened thereto a respective substantially v-shaped metal connecting arm 17 (fig. 6), the branches of which are symmetrical with respect to the vertical central plane of said collector. Said V-shaped arm 17 extends in a cantilever fashion and orthogonally with respect to the rear (i.e. inactive) surface of said collector.

All of said connecting arms 17 of the solar collectors 11 of each row F are pivoted, at the respective apices thereof distal from the collectors, with respect to a common joining bar 18, which extends parallel to said upper beam 12.1. The axis of the pivot pin of the arms 17 with respect to the bar 18 is substantially parallel to the axis Y-Y of the collectors 11. Moreover, said upper beam 12.1 carries fastened thereto, at one end thereof, a second hydraulic operating cylinder 19 (fig. 6), the rod 19.1 of which is connected with the free end thereof with respect to the hinge of a system of compass levers 20, the two rods 20.1, 20.2 of which are spread apart and connected with the free ends thereof to said joining bar 18. The pivot pin between the rod of the cylinder 19 and eyelet of the compass 20 presents an axis substantially parallel to the axis Y-Y of the collectors 11. The free end of the rod 20.1 of the compass 20 which is proximal to the operating cylinder 19, is pivoted in a fixed position with respect to the joining bar 18, while the free end of the other rod 20.2 of the compass 20 is connected slidingly to said joining bar 18 by means of a sliding shoe 20.3, for example made of Teflon, which surrounds said bar 18 and is pivoted with respect to the rod 20.2. The pivot axes of said ends of the rods 20.1 and 20.2 2 are substantially parallel to the axis Y-Y of the collectors.

By means of this arrangement, in the fashion of an articulated parallelogram, following extension or retraction of the rod 19.1 of the operating cylinder 19, the joining bar 18 is made to translate in parallel toward or away from said upper beam 12.1, determining through the arms 17 a corresponding rotation of the collectors 11 about the respective axes Y-Y, in a predetermined angular range. For example, said collectors 11, starting from an intermediate position, in which the active surface thereof is substantially coplanar with respect to one face of the beams 12.1 ( fig. 2), can rotate by a positive or negative angle of approximately 30° about the axis Y-Y thereof.

The system 10 according to the invention also comprises at least for one row F of collectors 11, two measurement transducers, one indicated with 21.1 and provided to detect the angular rotation of the structure 12 about the axis X-X, the other indicated with 21.2 and provided to detect the angular rotation of the single collectors 11 about the respective axis Y-Y.

The measurement transducer 21. 1 comprises a linear measurement probe, pivoted with respect to the body 13.1 of a pedestal 13 and mounted slidingly inside a respective guide, pivoted to the corresponding cross member 12.2 of the structure 12.

The measurement transducer 21. 2 comprises a linear measurement probe, pivoted with respect to a beam 12.1 of the structure 12 and received slidingly inside a respective guide, pivoted with respect to the joining bar 18.

The number 22 indicates a pilot solar collector (figs. 3, 4, 6), the active surface of which is of smaller dimensions with respect to those of the collectors 11. Said pilot collector 22 is fastened to one of the solar collectors 11 presenting the active surface thereof substantially coplanar with respect to that of said solar collector.

The number 23 indicates an electronic control unit connected in an electrical circuit to:
- said measurement transducers 21.1, 21.2, and to said pilot solar collector 22;
- a hydraulic control unit 24, branching from which are the hydraulic circuits 24.1, 24.2 to control the respective operating cylinders 15 and 19 and to supply a liquid tank 24.3;
- a PLC or industrial computer.

The PLC or industrial computer contains a program which, having taken account of the location of the system 10 in the territory, of the relative solar hour and of the annual calendar, automatically controls synchronized movement of the collectors 11 of the solar tracking system, through the two control units 23, 24, which determine extension or retraction of the rods of the operating cylinders 15, 19 as a function of the instructions received from said PLC.

To ensure optimum positioning of the solar collectors 11 with respect to the sun, the system will refer to the radiation values received from said pilot solar collector 22, so that, having identified the best position indicated by said pilot solar collector 22, all the solar collectors 11 are automatically and simultaneously orientated correspondingly.

The movement of said solar collectors 11 is such as to obtain maximum power.

It can be noted that, to stiffen the structure of each solar collector 11, in particular with respect to the dynamic impact of the wind, between the apex of the V-shaped arm 17 thereof and a lower area of the frame thereof, in proximity of the axial pivot with respect to the lower beam 12.1, there is fastened a sturdy diagonal metal rod 12.3 (fig. 6). By means of this arrangement, each solar collector 11 comprises a rear stiffening reinforcement formed of a spatial frame (17, 12.3) symmetrical with respect to the vertical central plane thereof (which contains the axis of rotation Y-Y) and fastened to three points of this collector, two of which on one side and one on the opposite side of the collector frame, while a diagonal rod (12.3) joins the last point with a central and equidistant point with respect to the other two.

As can be understood from the above, the invention allows the objects set forth in the initial part of the present description to be attained in a simple and efficient manner.

## Claims

1. System comprising an array of solar collectors with solar tracking including at least one row (F) of collectors with photovoltaic modules (11),
**characterized in that**
it comprises, for each row (F) of collectors (11), a sturdy flat supporting structure (12), presenting at least two parallel beams (12.1) and in which the collectors (11) are mounted rotatingly about a respective central axis (Y-Y) essentially orthogonal with respect to said beams,
**in that**
each supporting structure ( 12) is supported in a manner oscillating about a respective axis (X-X) essentially horizontal and substantially parallel to said beams (12.1), by means of a plurality of sturdy pedestals (13) firmly anchored to the ground or the like on which the system (10) is installed,
**in that**
it comprises at least one operating bar (14), guided to slide, in a respective plane substantially orthogonal to said axis (X-X) of oscillation of said at least one structure (12), by means of first operating cylinder means (15, 15.1), while articulated connecting rod means (16) are connected, at one end thereof, with respect to said operating bar (14) and, at the other end thereof, with respect to one of the two beams (12.1) of the structure (12), by means of respective pins with axes substantially orthogonal to said plane,
so that when the rod/rods (15.1) of said first cylinder means (15) is/are extended to the end of stroke, the structure (12) is oscillated about the axis (X-X) thereof to a first extreme operating position, while when said rod/rods (15.1) is/are fully retracted, this structure (12) is oscillated in a second extreme operating position, and
**in that**
each collector (11) comprises a respective connection arm (17) and all of said connecting arms (17) of the collectors of each row (F) are pivoted with respect to a common joining bar (18), which extends substantially parallel to said upper beams (12.1), which support second operating cylinder means (19), the rod (19.1) of which is pivoted with respect to the hinge of a system of compass levers (20), the two rods (20.1, 20.2) of which are spread apart and connected with the free ends thereof with respect to said joining bar (18); one of said rods (20.1) of the compass (20) is pivoted in a fixed position with respect to said joining bar (18), while the other rod (20.2) of the compass (20) is connected slidingly with respect to said joining bar (18), so that, in the fashion of an articulated parallelogram, following extension or retraction of the rod of said second cylinder means (19), said joining bar (18) is made to translate toward or away from said structure (12), determining through the arms (17) a corresponding rotation of the collectors (11) about the respective axes (Y-Y), in a predetermined angular range,
so that oscillation of each structure (12) about the axis (X-X) and oscillation of the collectors (11) about the respective axes ( Y-Y) determine perpendicular alignment of the active surface of the collectors (11) with respect to the solar radiation.

2. System of solar collectors as claimed in claim 1, **characterized in that** it comprises:
- at least for one row (F) of solar collectors (11), two measurement transducers, one (21.1.) provided to detect the angular rotation of the structure (12) about the axis (X-X) thereof, the other (21.2) provided to detect the angular rotation of the single collectors (11) about the respective axes (Y-Y),
- at least a pilot solar collector (22), integral with respect to at least one of said solar collectors (11) and presenting the active surface thereof substantially coplanar with respect to that of said at least one solar collector,
- electronic control means (23) connected in an electrical circuit with respect to said measurement transducers (21.1, 21.2) and to said pilot solar collector (22), and with respect to a hydraulic control unit (24), branching from which are hydraulic circuits (24.1. 29.2) to control and supply said operating cylinders (15, 19); said electronic control means also being functionally connected with respect to an industrial computer (PLC) or the like.

3. System of solar collectors as claimed in claim 2, **characterized in that** said industrial computer (PLC) contains a program which, having taken account of the location of the system (10) in the territory, of the relative solar hour and of the annual calendar, automatically controls synchronized movement of the collectors (11) of the solar tracking system, through said electronic/hydraulic control units (23, 24), which determine extension or retraction of the rods of the operating cylinders (15, 19), and **in that** said measurement transducers (21.1, 21. 2) measure the effective angular inclination of the solar collectors (11) with respect to the system axes (X-X, Y-Y) and these measurement values are transmitted to the computer (PLC), while the effective radiation values received from said pilot solar collector (22) are sent to said computer (PLC).

4. System of solar collectors as claimed in claim 2 and/or 3, **characterized in that**, to ensure optimum positioning of the solar collectors (11) with respect to the sun, the system refers to the radiation values received from said pilot solar collector (22), so that, having identified the best position indicated by said pilot solar collector (22), all said solar collectors (11) are automatically and simultaneously orientated correspondingly.

5. System of solar collectors as claimed in one or more of the preceding claims, **characterized in that** each pedestal (13) comprises a sturdy rectangular metal section bar (13.1) presenting an upside down U-shaped foot (13.2), also made of metal section bar and which rests, with shape coupling, on a corresponding sturdy metal section bar (13.3), fastened to the ground or the like, **in that** said section bars (13.3) fastened to the ground or the like extend, according to respective vertical planes essentially orthogonal to the axis (X-X) of oscillation of each structure (12), and **in that** at the upper end, each pedestal (13) carries a fixed sleeve (13.4, 13.5) oriented according to said axis (X-X) and which receives a corresponding through pin, fastened in the center line of a corresponding part (12.2) of the structure (12), according to a rocker arm arrangement.

6. System of solar collectors as claimed in the preceding claim, **characterized in that** each section bar (13.3) fastened to the ground slidingly supports a corresponding operating bar (14).

7. System of solar collectors as claimed in one or more of the preceding claims, **characterized in that** each solar collector (11) carries fastened thereto a respective substantially V-shaped metal connecting arm (17), the branches of which are symmetrical with respect to the vertical central plane of this collector and which extends in a cantilever fashion with respect to the rear surface of said collector, and **in that** all said connecting branches (17) of the solar collectors (11) of each row (F) are pivoted, with respect to a common joining bar (18).

8. System of solar collectors as claimed in one or more of the preceding claims, **characterized in that** each solar collector (11) comprises a rear stiffening reinforcement formed of a spatial frame (17, 12.3) symmetrical with respect to the vertical central plane thereof, which contains the respective axis of rotation (Y-Y), and fastened to three points of this collector, two of which on one side and one on the opposite side of the collector frame, while a diagonal rod (12.3) joins the last point with a central and equidistant point with respect to the other two.
